# EUROPEAN PATENT APPLICATION

(11) **EP 3 038 315 A1**
(43) Date of publication of application: **29.06.2016**
(21) Application number: 14794677.6
(22) Date of filing: 05.05.2014
(51) Int. Cl.: H04L 29/06

(54) **SESSION INITIATION PROTOCOL BASED SESSION METHOD, TERMINAL, AND SERVER**

(30) Priority: 22.09.2013 CN 201310439831
(71) Applicant: ZTE Corporation, Shenzhen, Guangdong 518057 (CN)
(72) Inventor: ZHANG, Jidong, Shenzhen Guangdong 518057 (CN)
(74) Representative: D'Halleweyn, Nele Veerle Trees Gertrudis
(86) International application number: PCT/CN2014/076775
(87) International publication number: WO 2014/180289

(57) **Abstract**

An embodiment of the present invention provides a session initiation protocol (SIP) based session method, terminal, and server, wherein the method includes: requesting for participating in a media session interaction after creating or joining in a session; receiving a session initiation protocol (SIP) number allocated by a session service server; initiating a session initiation protocol registration based on the session initial protocol number, and notifying the session service server after the registration is successful; initiating a session initiation protocol cancellation deregistration after requesting for ending or exiting the current session, and notifying the session service server after the deregistration is successful. The embodiment of the present invention can effectively save SIP number resources, reduce network bandwidth occupancy, and effectively reduce the device investment.

## Description

### Technical Field

The present invention relates to the field of communication technologies, and more particularly, to an SIP (Session Initiation Protocol) based session method, terminal, and server.

### Background of the Related Art

With the rapid development of information technology and the rapid popularity of the Internet, the demands on communication present features such as broadband, individualization, and integration. The goal of realizing broadband and IP (Internet Protocol) of the circuit-switched based traditional communication network and further realizing the NGN (Next-Generation Network) is an inevitable trend of the telecommunications network development.

As a core protocol in the NGN network, the SIP (Session Initiation Protocol) has a very wide range of application scenarios in various NGN based services. For example, the most common audio and video calls, as well as audio, video, and data based multimedia conferencing services perform session establishment and media negotiation based on the SIP protocol.

Similar to terminal numbers (such as mobile phone and fixed telephone numbers) in the traditional communication network, the SIP numbers are valuable and are limited in amount, releasing more SIP numbers also means investing in devices with larger capacity and better performance. At the same time, the session holding feature of the SIP itself determines that holding the SIP number online needs to occupy more bandwidth and invest in more high-performance access gateways (such as SBC (Session Border Controller)).

### Summary of the Invention

To solve the technical problem, the embodiment of the present invention is to provide an SIP based session method, terminal and server, to effectively save SIP number resources.

To solve the abovementioned technical problem, the embodiment of the present invention provides a session initiation protocol (SIP) based session method, comprising:
requesting for participating in a session media interaction after creating or joining in a session;
receiving a session initiation protocol number allocated by a session service server;
initiating a session initiation protocol registration based on the Session Initiation Protocol (SIP) number, and notifying the session service server after the registration is successful;
after requesting for ending or exiting the current session, initiating a Session Initiation Protocol deregistration, and notifying the session service server after the deregistration is successful.

Preferably, the abovementioned method further has the following feature: said initiating a Session Initiation Protocol registration based on the Session Initiation Protocol number comprises:
directly initiating a session initiation protocol registration to a Softswitch or IP Multimedia Subsystem core network based on the Session Initiation Protocol number; or
initiating a session initiation protocol registration to a softswitch or IP Multimedia Subsystem core network through an access gateway based on the Session Initiation Protocol number.

Preferably, the abovementioned method further has the following feature: said initiating a Session Initiation Protocol deregistration comprises:
directly initiating a session initiation protocol deregistration to a softswitch or IP Multimedia Subsystem core network; or
initiating a Session Initiation Protocol deregistration to a softswitch or IP Multimedia Subsystem core network through an access gateway.

In order to solve the abovementioned problem, the embodiment of the present invention further provides a Session Initiation Protocol based session method, comprising:
configuring an applied Session Initiation Protocol Number into a number pool;
after receiving a request of a terminal for participating in a media session interaction, selecting an idle Session Initiation Protocol number from the number pool to allocate to the terminal.

Preferably, the abovementioned method further has the following feature: after selecting an idle Session Initiation Protocol number from the number pool to allocate to the terminal, the method further comprises:
after receiving a notification that the terminal successfully performs a session initiation protocol registration, calling the Session Initiation Protocol number.

Preferably, the abovementioned method further has the following feature: after calling the Session Initiation Protocol number, the method further comprises:
after receiving a notification that the terminal successfully performs a Session Initiation Protocol deregistration, labeling the Session Initiation Protocol number as idle.

To solve the abovementioned problem, the embodiment of the present invention further provides a terminal, comprising:
a requesting module, configured to request for participating in a session media interaction after creating or joining in a session;
a receiving module, configured to receive a Session Initiation Protocol number allocated by a session service server;
a registering module, configured to initiate a Session Initiation Protocol registration based on the Session Initiation Protocol number, and notify the session service server after the registration is successful;
a deregistering module, configured to initiate a session initiation protocol deregistration after requesting for ending or exiting the current session, and notify the session service server after the deregistration is successful.

Preferably, the abovementioned terminal further has the following feature:
the registering module being configured to initiate a session initiation protocol registration based on the Session Initiation Protocol number, comprises: directly initiating a session initiation protocol registration to a softswitch or IP Multimedia Subsystem core network based on the Session Initiation Protocol number; or initiating a session initiation protocol registration to a softswitch or IP multimedia subsystem core network through an access gateway based on the session initial protocol number.

Preferably, the terminal further has the following feature:
the deregistering module being configured to initiate a Session Initiation Protocol deregistration, comprises: directly initiating a Session Initiation Protocol deregistration to a softswitch or IP Multimedia Subsystem core network; or initiating a session initiation protocol deregistration to a softswitch or IP Multimedia Core Network Subsystem through an access gateway.

To solve the abovementioned problem, the embodiment of the present invention further provides a session service server, comprising:
a configuring module, configured to configure an applied Session Initiation Protocol Number into a number pool;
an allocating module, configured to select an idle Session Initiation Protocol number from the number pool to allocate to the terminal after receiving a request of the terminal for participating in a session media interaction.

Preferably, the abovementioned session service server further has the following feature: it further comprises:
a calling module, configured to, call the Session Initiation Protocol number after receiving a notification that the terminal successfully performs a session initiation protocol registration.

Furthermore, the abovementioned session service server further has the following feature: it further comprises:
a labeling module, further configured to label the Session Initiation Protocol number as idle after receiving a notification that the terminal successfully performs a Session Initiation Protocol deregistration.

In summary, the embodiment of the present invention provides an SIP based session method, terminal and server, to effectively save SIP number resources, reduce network bandwidth occupancy, and effectively reduce the device investment.

### Brief Description of the Drawings

FIG. 1 is a schematic diagram of a system in accordance with an embodiment of the present invention;
FIG. 2 is a flow chart of an SIP based session method in accordance with an embodiment of the present invention;
FIG. 3 a schematic diagram of a terminal in accordance with an embodiment of the present invention;
FIG. 4 is a schematic diagram of a session service server in accordance with an embodiment of the present invention.

### Preferred Embodiments of the Invention

Hereinafter, in conjunction with the accompanying drawings, the embodiments of the present invention will be described in detail. In the case of no conflict, embodiments and features in the embodiments of the present application may be arbitrarily combined with each other.

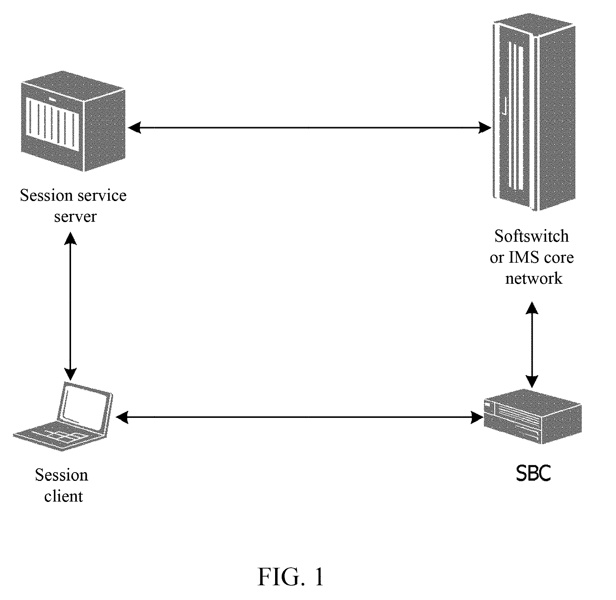

The embodiment of the present invention needs one session service server and any smart terminal provided with session client software, as shown in FIG. 1.

The session service server has session media processing capability, session management capability, and SIP number pool management capability, it performs subscription and registration in the softswitch or IMS core network, and provides a variety of ways (such as, but not limited to WEB portal) for the session client to access.

The session client software runs in a smart terminal, the smart terminal has an IP network connectivity, and can use media capture or playback devices such as a microphone, speaker or camera when participating in a multimedia session, and the session client software can access the session service server in a variety of ways.

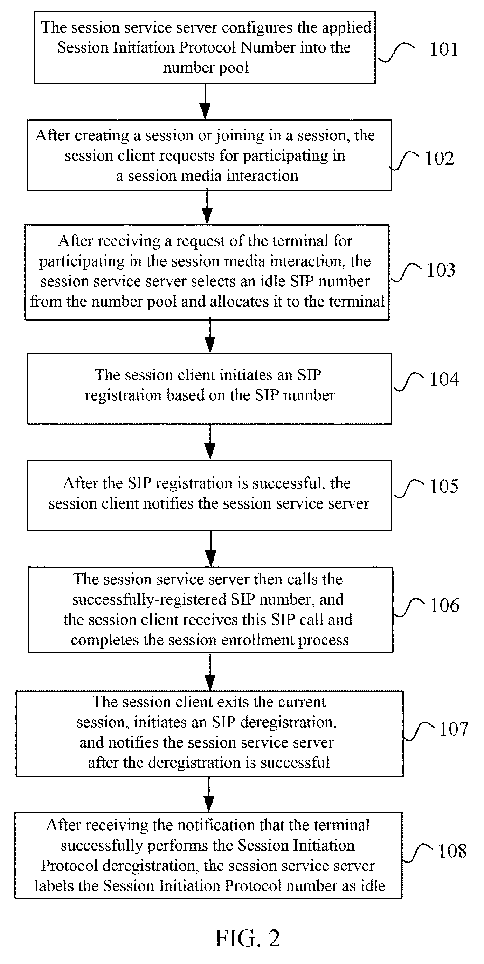

After the abovementioned session service server and the session client software are installed and configured completely, as shown in FIG. 2, it can be achieved through the following process:
in step 101, the session service server configures the applied Session Initiation Protocol Number into the number pool;
the session service server performs the subscription and registration in the softswitch or IMS core network, it configures the SIP number applied from the softswitch or IMS core network into its own number pool.

In step 102, after creating a session or joining in a session, the session client requests for participating in a session media interaction;
the session client logs in the session service server, and performs operations such as session inquiry and organization.

The session client creates a new session or joins in a queried and ongoing session, if it selects to participate in the media session interaction, it is to proceed to Step 103;

It selects to participate in the session media interaction, for example, it may send local audio and video medias or receive session audio and video medias sent from the media server.

In step 103, after receiving a request of the terminal for participating in the session media interaction, the session service server selects an idle SIP number from the number pool and allocates it to the terminal;
the session service server selects an idle SIP number from the SIP number pool and allocates it to the session client, and notifies the session client of the address port number of the SBC, the softswitch or the IMS core network.

In step 104, the session client initiates an SIP registration based on the SIP number;
the session client initiates an SIP registration to the softswitch or the IMS core network through the SBC (depending on a different networking, the SIP registration may be directly initiated to the softswitch or the IMS core network without through the SBC).

In step 105, after the SIP registration is successful, the session client notifies the session service server;

In step 106, the session service server then calls the successfully-registered SIP number, the session client receives this SIP call and completes the session enrollment process, and starts to perform media interaction with other members in the session.

In step 107, the session client exits the current session, initiates an SIP deregistration, and notifies the session service server after the deregistration is successful;
after the session client exits the current session, it deregisters the SIP number from the SBC or the softswitch or the IMS core network, and notifies the session service server to label the SIP number in the SIP number pool as idle.

In step 108, after receiving the notification that the terminal successfully performs the Session Initiation Protocol deregistration, the session service server labels the Session Initiation Protocol number as idle.

If the session service client only performs the inquiry and management operations but not create a session after logging in the session service server; or only performs a session control but not participates in a media interaction when creating the session, there is no need to apply for an SIP number.

An SIP number is dynamically applied only when it is needed to create or join in a multimedia session with media, and the number is released immediately upon exiting the session. When there is no need to have a conferencing, it may also log in the session service server to perform operations such as member management, historical session inquiry, session reservation, in this case, there is no need to apply for an SIP number. Therefore, when creating an SIP session based multimedia conferencing system, it only needs to apply for a small amount of SIP numbers in the softswitch or IMS (IP Multimedia Subsystem) core network, and there is no need to apply for a corresponding number of SIP numbers according to the maximum user capacity, and furthermore, it can reduce the capacity and performance requirements on the access gateway.

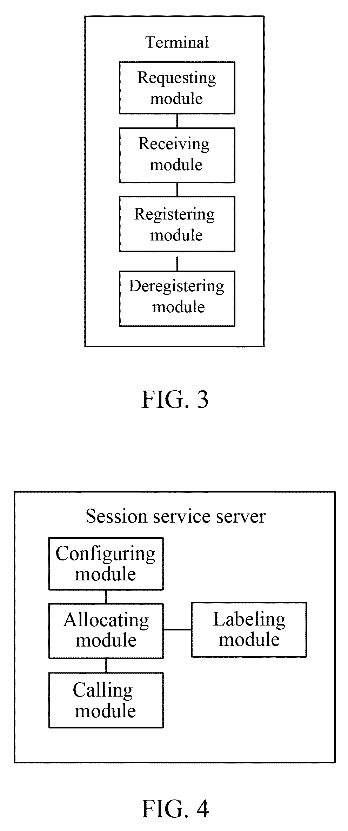

FIG. 3 is a schematic diagram of a terminal in accordance with an embodiment of the present invention, as shown in FIG. 3, the terminal of the present embodiment may comprise:
a requesting module, configured to request for participating in a session media interaction after creating or joining in a session;
a receiving module, configured to receive a Session Initiation Protocol number allocated by a session service server;
a registering module, configured to initiate a Session Initiation Protocol registration based on the Session Initiation Protocol number, and notify the session service server after the registration is successful;
a deregistering module, configured to initiate a Session Initiation Protocol deregistration after requesting for ending or exiting the current session, and notify the session service server after the deregistration is successful.

Wherein, the registering module being configured to initiate a Session Initiation Protocol registration based on the Session Initiation Protocol number, comprises: directly initiating a session initiation protocol registration to a softswitch or IP Multimedia Subsystem core network based on the Session Initiation Protocol number; or, initiating a session initiation protocol registration to a softswitch or IP multimedia subsystem core network through an access gateway based on the session initial protocol number.

Wherein, the deregistering module being configured to initiate a Session Initiation Protocol deregistration, comprises: directly initiating a Session Initiation Protocol deregistration to a softswitch or IP Multimedia Subsystem core network; or initiating a session initiation protocol deregistration to a softswitch or IP Multimedia Core Network Subsystem through an access gateway.

FIG. 4 is a schematic diagram of a session service server in accordance with an embodiment of the present invention, as shown in FIG. 4, the session service server of the present embodiment may comprise:
a configuring module, configured to configure an applied Session Initiation Protocol Number in a number pool;
an allocating module, configured to select an idle Session Initiation Protocol number from the number pool and allocate it to the terminal after receiving a request of the terminal for participating in a session media interaction.

In the preferred embodiment, the session service server may further comprise:
a calling module, configured to, call the Session Initiation Protocol number after receiving a notification that the terminal successfully performs a session initiation protocol registration.

In a preferred embodiment, the session service server may further comprise:
a labeling module, further configured to label the Session Initiation Protocol number as idle after receiving a notification that the terminal successfully performs a Session Initiation Protocol deregistration.

In the present embodiment, an SIP number is applied only when participating in the session media interaction, and there is no need to use the SIP numbers in other time. Therefore, when creating the session system, it only needs to apply for a small amount of SIP number resources, because not every session client participates in the session and performs the media interaction all the time. This effectively reduces the SIP number application costs, saves the SIP number resources, and improves the SIP number usage efficiency. Higher SIP number usage efficiency also means that the telecommunication operator can reduce the SBC performance and capacity requirements and effectively save the cost without investing more to configure higher-capacity softswitch or IMS core network. At the same time, a fewer number of SIP numbers also means lower IP network bandwidth occupation, which has a direct effect on the IP network operators for reducing the device investment and reducing the network load.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention, and of course, the present invention may have many other embodiments, without departing from the spirit and essence of the present invention, those skilled in the art can make one or more corresponding changes and modifications according to the embodiments of the present invention, and these corresponding changes and modifications should belong to the protection scope of the appended claims of the embodiments of the present invention.

### Industrial Applicability

The embodiment of the present invention provides an SIP based session method, terminal and server, to effectively save SIP number resources, reduce network bandwidth occupancy, and effectively reduce the device investment.

## Claims

1. A session initiation protocol (SIP) based session method, comprising:
requesting for participating in a session media interaction after creating or joining in a session;
receiving a session initiation protocol number allocated by a session service server;
initiating a session initiation protocol registration based on the session initiation protocol number, and notifying the session service server after the registration is successful;
after requesting for ending or exiting the current session, initiating a session initiation protocol deregistration, and notifying the session service server after the deregistration is successful.

2. The method of claim 1, wherein, said initiating a session initiation protocol registration based on the session initiation protocol number comprises:
directly initiating a session initiation protocol registration to a softswitch or IP Multimedia Subsystem core network based on the session initiation protocol number; or
initiating a session initiation protocol registration to a softswitch or IP Multimedia Subsystem core network through an access gateway based on the session initiation protocol number.

3. The method of claim 1 or 2, wherein, said initiating a session initiation protocol deregistration comprises:
directly initiating a session initiation protocol deregistration to a softswitch or IP Multimedia Subsystem core network; or
initiating a session initiation protocol deregistration to a softswitch or IP Multimedia Subsystem core network through an access gateway.

4. A session initiation protocol based session method, comprising:
configuring an applied session initiation protocol number into a number pool;
after receiving a request of a terminal for participating in a media session interaction, selecting an idle session initiation protocol number from the number pool to allocate to the terminal.

5. The method of claim 4, wherein, after selecting an idle session initiation protocol number from the number pool to allocate to the terminal, the method further comprises:
after receiving a notification that the terminal successfully performs a session initiation protocol registration, calling the session initiation protocol number.

6. The method of claim 5, wherein, after calling the session initiation protocol number, the method further comprises:
after receiving a notification that the terminal successfully performs a session initiation protocol deregistration, labeling the session initiation protocol number as idle.

7. A terminal, comprising:
a requesting module, configured to request for participating in a session media interaction after creating or joining in a session;
a receiving module, configured to receive a session initiation protocol number allocated by a session service server;
a registering module, configured to initiate a session initiation protocol registration based on the session initiation protocol number, and notify the session service server after the registration is successful;
a deregistering module, configured to initiate a session initiation protocol deregistration after requesting for ending or exiting the current session, and notify the session service server after the deregistration is successful.

8. The terminal of claim 7, wherein,
the registering module being configured to initiate a session initiation protocol registration based on the session initiation protocol number, comprises: directly initiating a session initiation protocol registration to a softswitch or IP Multimedia Subsystem core network based on the session initiation protocol number; or initiating a session initiation protocol registration to a softswitch or IP multimedia subsystem core network through an access gateway based on the session initial protocol number.

9. The terminal of claim 7 or 8, wherein:
the deregistering module being configured to initiate a session initiation protocol deregistration, comprises: directly initiating a session initiation protocol deregistration to a softswitch or IP Multimedia Subsystem core network; or initiating a session initiation protocol deregistration to a softswitch or IP Multimedia Core Network Subsystem through an access gateway.

10. A session service server, comprising:
a configuring module, configured to configure an applied session initiation protocol number into a number pool;
an allocating module, configured to select an idle session initiation protocol number from the number pool to allocate to the terminal after receiving a request of the terminal for participating in a session media interaction.

11. The session service server of claim 10, wherein, the session service server further comprises:
a calling module, configured to, call the session initiation protocol number after receiving a notification that the terminal successfully performs a session initiation protocol registration.

12. The session service server of claim 11, wherein, the session service server further comprises:
a labeling module, further configured to label the session initiation protocol number as idle after receiving a notification that the terminal successfully performs a session initiation protocol deregistration.
